(19) Europäisches Patentamt
European Patent Office
Office européen des brevets

(11) **EP 2 110 873 B1**

(12) **FASCICULE DE BREVET EUROPEEN**

(45) Date de publication et mention
de la délivrance du brevet:
**07.09.2011 Bulletin 2011/36**

(51) Int Cl.:
*H01M 8/12* (2006.01)   *C01G 23/00* (2006.01)
*C01G 51/00* (2006.01)   *C01G 53/00* (2006.01)
*H01M 4/90* (2006.01)

(21) Numéro de dépôt: **09290267.5**

(22) Date de dépôt: **10.04.2009**

(54) **Titanates de structure perovskite ou dérivée et leurs applications**

Perowskitstruktur-Titanate oder deren Derivate und ihre Anwendungen

Titanates with perovskite or derivative structure and applications thereof

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.04.2008 FR 0802032**

(43) Date de publication de la demande:
**21.10.2009 Bulletin 2009/43**

(73) Titulaire: **Commissariat à l'Énergie Atomique et aux Énergies Alternatives**
**75015 Paris (FR)**

(72) Inventeurs:
• **Gauthier, Gilles**
**38850 Bilieu (FR)**
• **Delahaye, Thibaud**
**38950 Saint Martin le Vinoux (FR)**

(74) Mandataire: **Corizzi, Valérie et al**
**Cabinet ORES,**
**36, rue de Saint Pétersbourg**
**75008 Paris (FR)**

(56) Documents cités:
WO-A-03/094268       JP-A- 2005 050 760
JP-A- 2007 051 033    US-A1- 2004 265 669

• DATABASE INSPEC [Online] avril 2006 (2006-04), Q.X. FU ET AL.: "La0.4Sr0.6Ti1-xMnxO3-[delta] perovskites as anode materials for solid oxide fuel cells" XP002495934 Database accession no. 8841093 & JOURNAL OF THE ELECTROCHEMICAL SOCIETY, vol. 153, no. 4, 24 février 2006 (2006-02-24), pages D74-D83, ISSN: 0013-4651
• P.R. SLATER ET AL.: "Synthesis and electrical characterisation of doped perovskite titanates as potential anode materials for solid oxide fuel cells" JOURNAL OF MATERIALS CHEMISTRY, vol. 7, no. 12, 1 décembre 1997 (1997-12-01), pages 2495-2498, XP000736616 ISSN: 0959-9428

Remarques:
Le dossier contient des informations techniques présentées postérieurement au dépôt de la demande et ne figurant pas dans le présent fascicule.

**Description**

L'invention a pour objet de nouveaux matériaux du type titanate de structure perovskite ou dérivée et ses utilisations pour la production d'électrodes, plus particulièrement dans des cellules de pile SOFC (pour Solid Oxide Fuel Cell ou pile à combustible à électrode oxyde solide) ou des cellules d'Electrolyseur de la Vapeur d'eau à Haute Température (EVHT), également connues sous le nom de SOEC (pour Solid Oxide Electrolysis Cell). Ces nouveaux matériaux présentent la particularité de pouvoir être employés comme matériau de cathode de SOFC, d'anode de SOEC, mais aussi, après réduction partielle, comme matériau d'anode de SOFC ou de cathode de SOEC.

Les cellules SOFC constituent l'un des systèmes les plus avancés pour produire de l'électricité avec un rendement élevé et sans nuire à l'environnement. Elles peuvent utiliser comme combustible de l'hydrogène ou un hydrocarbure comme le méthane.

Chaque cellule comporte deux électrodes, une anode et une cathode, séparées par un électrolyte.

Chaque compartiment d'électrode doit être constitué d'un matériau qui satisfait plusieurs contraintes : la microstructure doit être stable pendant la production et l'utilisation de la cellule ; les différents composants de la cellule doivent être chimiquement compatibles et présenter des coefficients d'expansion thermique proches ; la porosité et l'activité catalytique doivent permettre à la cellule de présenter de bonnes performances. De façon plus précise, l'anode et la cathode doivent être dotées d'une conductivité électronique élevée.

En outre, elles doivent être stables en conditions réductrices pour l'anode et oxydantes pour la cathode. Il est en outre souhaitable que le matériau d'électrode présente une conductivité ionique.

Le matériau habituel pour la production de l'électrolyte est l'oxyde de zirconium stabilisé à l'oxyde d'yttrium (YSZ).

Les anodes des piles SOFC sont habituellement constituées d'un mélange céramique - métal (cermet). Les cermets à base de nickel, en particulier les cermets à base de Ni et d'oxyde de zirconium stabilisé par de l'oxyde d'yttrium (désigné YSZ) ont été mis au point et fonctionnent de façon remarquable avec de l'hydrogène comme combustible. Pour les cellules fonctionnant avec des hydrocarbures, des cermets Ni-cérine ou Cu-cérine ont été mis au point plus récemment.

Les cermets Ni/YSZ ont néanmoins de nombreux inconvénients : à haute température ils provoquent le frittage des particules de nickel, l'empoisonnement au soufre et le dépôt de carbone lorsque le système fonctionne avec des hydrocarbures. Si, pour éviter le dépôt de carbone, on introduit une quantité importante d'eau en tête de cellule, il se produit un grossissement accéléré des grains de nickel et à terme une perte des performances de l'électrode.

Dans le cas des cellules EVHT, l'utilisation de cermet Ni/YSZ implique d'employer une quantité importante d'hydrogène dans l'eau utilisée comme combustible en entrée de cathode, et cela pour éviter une oxydation du nickel en NiO et/ou Ni(OH) notamment, ce qui entraînerait une dégradation de l'électrode, surtout lors des phases d'arrêt du système.

Plusieurs voies ont été étudiées en vue de remplacer les cermets dans les cellules des piles SOFC :

Le titanate de strontium seul, uniquement substitué par du lanthane (La) en site A ne convient pas comme explicité dans Q.X. Fu et al., Journal of the Electrochemical Society, 153(4) D74-D83 (2006) et Olga A. Marina et al., Solid State Ionics, 149 (2002), 21-28.

Les titanates de strontium substitués par d'autres métaux de transition semblent constituer une voie prometteuse, mais leur mise au point nécessite des améliorations dans la formulation du matériau.

Une des solutions envisagées pour limiter le vieillissement prématuré observé aux interfaces électrode/électrolyte est de développer de nouveaux matériaux pouvant être à la fois utilisés comme cathode et comme anode. En effet, l'introduction d'un seul et même matériau d'électrode signifie avant tout une seule compatibilité chimique et thermomécanique avec l'électrolyte à gérer au sein de la cellule. La configuration symétrique permet par ailleurs un certain nombre de simplifications importantes.

En effet, l'introduction d'un seul et même matériau pour les électrodes devrait faciliter la réduction des contraintes mécaniques au sein de la cellule. Elle devrait aussi permettre la simplification du procédé d'élaboration par l'emploi d'un co-frittage des électrodes, pouvant limiter les phénomènes d'interdiffusion au sein de la cellule, tout en permettant d'en diminuer le coût de fabrication et la manipulation parfois délicate. Ainsi des cellules plus robustes, plus fiables et potentiellement moins coûteuses devraient pouvoir être réalisées.

Un autre des objectifs que l'on a cherché à atteindre est la synthèse d'un nouveau type de cermet contenant une quantité très faible de nickel ayant un rôle purement catalytique associé à une matrice céramique conductrice mixte (ionique/électronique) et qui plus est basique c'est-à-dire à fort pouvoir « décokant » en présence de faibles quantités d'$H_2O$ et/ou de $CO_2$.

On a notamment cherché à obtenir un composé basique comportant une très faible quantité de catalyseur, extrêmement divisé; et donc extrêmement actif, et réparti de manière homogène à l'interface porosité/céramique.

Pour résoudre l'ensemble de ces problèmes on a cherché à mettre au point un matériau qui puisse être utilisé pour la fabrication de l'anode et de la cathode, de façon à résoudre les problèmes de compatibilité thermique, chimique et mécanique au sein de la cellule et à simplifier les conditions de fabrication de la cellule.

Des cellules symétriques, employant le même matériau comme matériau d'anode et comme matériau de cathode sont connues dans l'art antérieur : D.M. Bastidas, et al., Journal of Materials Chemistry, 16, (2006), 1603-1605, ont mis en évidence la possibilité d'utiliser un composé de type pérovskite $(La_{0,75}Sr_{0,25})Cr_{0,5}Mn_{0,5}O_3$ (LSCM) comme matériau d'électrode pour SOFC pouvant être utilisé à la fois comme anode et comme cathode afin de développer des cellules symétriques. Les premiers tests réalisés en cellule symétrique (LSCM/YSZ/LSCM) témoignent de performances relativement bonnes à 900°C : 300 mW.cm$^{-2}$ sous $H_2$ et 225 mW.cm$^{-2}$ sous $CH_4$. Dans ce cas précis c'est le même matériau, stable en cyclage redox, qui est préconisé comme matériau d'anode et de cathode pour SOFC.

J.C. Ruiz-Moralez et al., Electrochimica Acta, 52, (2006), 278-284 ont cherché à optimiser la microstructure des électrodes à base de LSCM afin d'augmenter les performances de la cellule LSCM/YSZ/LSCM. Ils obtiennent à 950°C une puissance de 550 mW.cm$^{-2}$ sous $H_2$ et de 350 mW.cm$^{-2}$ sous $CH_4$. Même si elles sont déjà dignes d'intérêt, ces valeurs ne sont toutefois pas encore suffisamment élevées étant donnée la température de fonctionnement.

Un autre type de cellules symétriques $La_{0,75}Sr_{0,25}Cr_{0,5}X'_{0,5}$ $O_{3-\delta}/La_{0,9}Sr_{0,1}Ga_{0,9}Mg_{0,2}O_{2,85}/La_{0,75}Sr_{0,25}$ $Cr_{0,5}X'_{0,5}O_{3-\delta}$(X' = Mn, Fe et Al) a été développé récemment par cette équipe (J. Peña-Martinez, et al., Electrochimica Acta, 52, (2007), 2950-2958). Ils ont atteint une puissance maximale de 54 mW.cm$^{-2}$ à 800°C sous Ar/$H_2$ (5%) humidifié pour les cellules de type $La_{0,75}Sr_{0,25}Cr_{0,5}M'_{0,5}$ $O_{3-\delta}/La_{0,9}Sr_{0,1}Ga_{0,8}Mg_{0,8}O_{2,85}/La_{0,75}Sr_{0,25}Cr_{0,5}Cr_{0,5}Mn'_{0,5}O_{3-\delta}$. Ces travaux récents montrent l'intérêt de développer la technologie des cellules symétriques.

Le document WO 03/094268 décrit des titanates de strontium dopés et leur utilisation pour produire des électrodes de cellules électrochimiques et de dispositifs tels que des SOFC, des SOEC.

Le titane peut être substitué par du Ni mais à hauteur de 20% au maximum.

Le document JP 2005 050760 A divulgue un catalyseur entrant dans la constitution d'anode pour pile à combustible à électrolyte polymère solide, de structure pérovskite répondant à la formule A $(Ti_{1-y}B_y)O_{3-\delta}$ dans laquelle A est choisi parmi les métaux alcalino-terreux, les métaux alcalins, les lanthanides, l'yttrium et le scandium, et B est choisi parmi les métaux de transition et l'étain, la proportion atomique (y) du dopant B étant inférieure à 60%.

P.R: Slater et al. dans Journal of Materials Chemistry, vol. 7, no. 12, 1er décembre 1997, pages 2495-2498, décrivent des titanates de strontium dopés au Nb, de structure pérovskite, comme matériau potentiel d'anode pour piles à combustible à électrolyte solide oxyde.

Le document US 2004/265669 A1 divulgue des composés titanate de strontium utilisés au sein d'anodes pour pile à combustible à électrolyte oxyde solide, ces composés ayant une structure pérovskite ou dérivée et répondant à la formule générale $(Sr_{1-1.5x}M1_x)_{1-y/2}Ti_{1-y}M2_yO_3$(I) ou $(Sr_{1-1.5x}M1_x)_{1-y/2}Ti_{1-y/2}M2_yO_{3-\delta}$(II) dans lesquelles M1 est un premier atome métallique trivalent dopant du strontium (de préférence Y), x est le pourcentage molaire du dopant M1 (de préférence 0-0.04), M2 est un second atome métallique pentavalent dopant du titane (de préférence Nb), y est le pourcentage molaire du dopant M2 (de préférence 0-0.2) et δ= 0-0.7.

La présente invention se fonde sur la mise au point d'un nouveau matériau du type titanate de structure perovskite substitué sur le site du titane par un élément de transition comme par exemple du nickel réductible sous hydrogène de façon à passer à l'état métallique.

Cette propriété permet au matériau d'être employé comme cathode de cellule SOFC, et simultanément, une fois réduit, comme anode d'une même cellule.

L'invention a pour premier objet un composé répondant à la formule générale (I) :

$$M^1_{x1}M^2_{x2}(Ti_{(1-y-z)}M^3_yM^4_z)O_{(3-\delta)} \qquad (I)$$

dans laquelle :

- M$^1$ représente un atome ou un mélange d'atomes choisis parmi les alcalino-terreux,
- M$^2$ représente un atome ou un mélange d'atomes choisis parmi les terres rares,
- M$^3$ représente un atome ou un mélange d'atomes choisis parmi les métaux de transition suivants : Ni, Co, Cu,
- M$^4$ représente un atome ou un mélange d'atomes choisis parmi les métaux de transition autres que Ni, Co, Cu ; les terres rares acceptant une coordinance 6 ; les métaux pauvres de degré d'oxydation (+III),
- x = $x_1$+$x_2$ représente la stoechiométrie de A par rapport à B dans la structure pérovskite $ABO_3$ avec $0,9 \le x \le 1$ ; $0 < x_1 < 1$ ; $0 < x_2 < 1$,
- y représente le pourcentage molaire de M$^3$ dans le sous-réseau du titane et $0,25 \le y \le 0,75$,
- z représente le pourcentage molaire de M$^4$ dans le sous-réseau du titane et $0 \le z \le 1$,
- δ représente un nombre et $0 \le \delta \le 0,5$. Ce coefficient permet de rendre compte de la présence éventuelle de lacunes d'oxygène dans la structure pérovskite de façon à maintenir son électroneutralité et cela notamment sous atmosphère réductrice dans laquelle Ti peut adopter, même partiellement, un degré d'oxydation inférieur à +IV.

L'expression « terre rare » désigne un ensemble de 17 éléments, comprenant les lanthanides : Lanthane (La), Cerium (Ce), Praséodyme (Pr), Néodyme (Nd), Prométhium (Pm), Samarium (Sm), Europium (Eu), Gadolinium (Gd), Terbium (Tb), Dysprosium (Dy), Holmium (Ho), Erbium (Er), Thulium (Tm), Ytterbium (Yb), Lutétium (Lu), ainsi que PYttrium (Y) et le Scandium (Sc).

L'expression « alcalino-terreux » désigne un ensemble d'atomes composé de Be, Mg, Ca, Sr, Ba, Ra.

L'expression « métaux de transition » désigne un ensemble constitué des 29 éléments chimiques de numéro atomique 21 à 30, 39 à 48 et 72 à 80: Sc, Ti, V, Cr, Mn, Fe, Co, Ni, Cu, Zn, Y, Zr, Nb, Mo, Tc, Ru, Rh, Pd, Ag, Cd, Hf, Ta, W, Re, Os, Ir, Pt, Au, Hg.

L'expression « métaux pauvres » désigne un ensemble constitué des éléments chimiques métalliques qui dans le tableau de la classification périodique des éléments sont adjacents aux métalloïdes. Cet ensemble est plus précisément constitué des atomes suivants : Aluminium, Gallium, Indium, Etain, Thallium, Plomb, Bismuth.

De façon préférentielle, dans la formule (I), une ou plusieurs des conditions suivantes est vérifiée :

- $M^1$ est choisi parmi : Ba, Sr, Ca ou un mélange de ces atomes,
- $M^2$ est choisi parmi : La, Ce, Pr, Nd, Y, ou un mélange de ces atomes,
- $M^3$ représente Ni,
- $M^4$ représente un atome ou un mélange d'atomes choisis parmi :

    (i) les métaux de la première série de transition, de numéro atomique de 21 à 30, en dehors de Ni, Co, Cu et encore plus préférentiellement parmi : Mn, Fe, V
    (ii) les métaux pauvres suivants : Al, Ga, In,

- $0,95 \leq x \leq 1$,
- $0,25 \leq y \leq 5\ 0,75$.

Préférentiellement $0 \leq x_1 \leq 0,5$ ; $0,4 \leq x_2 \leq 1$.

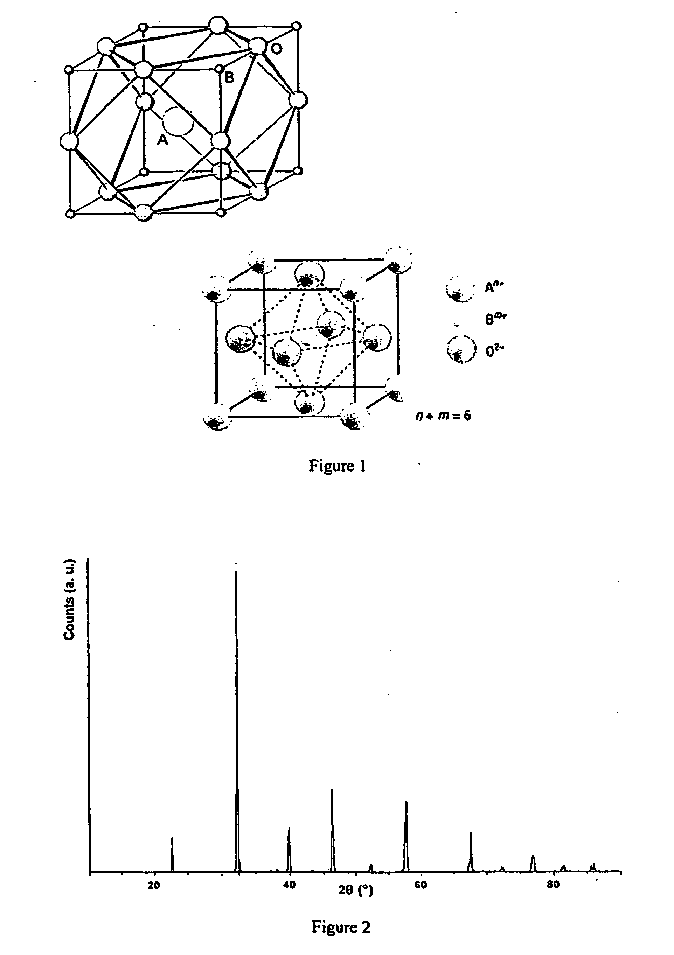

Les composés de formule (I) ont une structure pérovskite. Le terme de pérovskite désigne une famille de minéraux de même structure dont la formule générale est $ABO_3$. Dans la structure pérovskite cubique idéale, la coordinence des atomes A est 12 : ils sont sur un site à environnement cubique d'oxygène. La coordinence des atomes B est 6 : ils sont sur un site à environnement octaédrique d'oxygène. Ainsi, la structure pérovskite est constituée par des octaèdres $BO_6$ liés par les sommets le long des trois axes cristallographiques, les atomes A étant placés dans les sites laissés vacants par les octaèdres (Figure 1).

Néanmoins, il est rare que la structure reste aussi symétrique et de nombreuses distorsions sont en général observées (déplacements polaires, rationnels ou sous l'effet Jahn-Teller des ions) comme cela est décrit par K.S. Aleksandrov *et al.* (K.S. Aleksandrov and V.V. Berznosikov, Hierarchies of perovskite-like crystals (review), Phys. Solid State, 39, (1997), 695-714).

Un autre objet de l'invention est un procédé de fabrication des composés de formule (I) :

Les composés de formule (I) sont préparés en règle générale en présence d'air. Les oxydes et/ou les carbonates métalliques de Ti, $M^1$, $M^2$, $M^3$ et $M^4$ sont choisis en fonction de la formule (I) attendue, et dans les proportions stoechiométriques appropriées, c'est-à-dire les proportions stoechiométriques de la formule choisie.

Les composants (oxydes et/ou carbonates métalliques) sont soumis à un broyage en présence de préférence d'un solvant, tel qu'un hydrocarbure léger, comme par exemple du pentane, de l'hexane, de l'heptane, voire éventuellement un alcool léger de type éthanol ou bien encore une cétone telle que l'acétone et en présence d'air, pendant plusieurs minutes à plusieurs heures. Puis le solvant est évaporé, la poudre est pastillée et calcinée, de préférence à une température supérieure à 1 000°C, avantageusement comprise entre 1 000°C et 1 400°C, pendant plusieurs heures sous air.

Selon une variante, l'invention a pour objet un composé de formule générale (II) :

$$(M^1_{x1}M^2_{x2})_{(m+1)}(Ti_{(1-y-z)}M^3_y M^4_z)_m O_{3m+1-\delta} \qquad (II)$$

dans laquelle $M^1$, $M^2$, $M^3$, $M^4$, $x_1$, $x_2$, $y$, $z$, $\delta$ ont la même signification que dans la formule (I) et m est un entier supérieur ou égal à 1.

Selon cette variante, le composé de formule (II) a une structure dérivée de la pérovskite et que l'on nomme Ruddlesden-Popper, comparable à celles illustrées par F. Lichtenberg et al. (Progress in Solid State Chemistry, 29, (2001), 1-17) et peut être obtenue selon une méthode similaire à l'obtention des composés de la formule (I) en adaptant les protocoles conformément aux enseignements de l'art F. Lichtenberg et al. (Progress in Solid State Chemistry, 29, (2001), 1-18) et W. Sugimoto et al. (Solid State Ionics, 108, (1998), 315-319).

De façon préférentielle, dans la formule (II) une ou plusieurs des conditions suivantes est vérifiée :

- M$^1$ est choisi parmi : Ba, Sr, Ca ou un mélange de ces atomes,
- M$^2$ est choisi parmi : La, Ce, Pr, Nd,Y ou un mélange de ces éléments,
- M$^3$ représente Ni,
- M$^4$ représente un atome ou un mélange d'atomes choisis parmi :

  (i) les métaux de la première série de transition, de numéro atomique de 21 à 30, en dehors de Ni, Co, Cu et encore plus préférentiellement un atome ou un mélange d'atomes choisis parmi : Mn, Fe, V,
  (ii) les métaux pauvres suivants : Al, Ga, In,

- m=1,
- $0,95 \leq x \leq 1$,
- $0,25 \leq y \leq 0,75$.

Préférentiellement $0,20 \leq x_1 \leq 0,80$ ; $0,20 \leq x_2 \leq 0,80$.

Les nouveaux matériaux pérovskite de l'invention, de formule (I) ou (II) peuvent être utilisés pour la fabrication de cathodes de piles SOFC ou d'anodes de cellules EVHT.

Les nouveaux matériaux pérovskite de l'invention de formule (I) ou (II) peuvent également être utilisés pour la fabrication de matériau d'anodes de piles SOFC ou de cathodes de cellules EVHT. Pour cela ils sont soumis à une étape de réduction partielle qui conduit à un matériau composite présentant une dispersion très homogène du composé métallique M$^3$ à la surface du matériau support.

La réduction du matériau de cathode pour former le cermet constitutif de l'électrode à hydrogène est basée sur la méthode d'exsolution. La mise en forme de cermets par exsolution a été très développée dans le domaine de la catalyse afin d'obtenir des composites présentant une dispersion très homogène du catalyseur métallique à la surface du support de catalyse et d'améliorer l'intimité entre catalyseur et substrat de catalyse. Ce procédé qui consiste à réduire, souvent *in situ*, un composé contenant un élément métallique (généralement le nickel) afin de le sortir de la structure cristalline totalement ou partiellement et de former alors le cermet a été baptisé par R. Shiozaki et al. (Stud. Surf. Sci. Catal., 110, (1997), 701-710), la méthode SPC (Solid Phase Crystallisation). Les cermets alors formés sont utilisés en température en présence de $CH_4$ pour produire, par oxydation partielle, du gaz de synthèse (syngas). Cette méthode est plus avantageuse pour préparer des cermets que la technique d'imprégnation qui ne permet pas d'obtenir une répartition aussi homogène de nanoparticules de nickel.

T. Hayakawa *et al.* ont notamment beaucoup étudié la mise en oeuvre par SPC de cermets de type Ni/Ca$_{1-x}$Sr$_x$TiO$_3$ (T. Hayakawa et al, Angew. Chem. Int. Ed. Engl., 35, (1996), 192-195 ; K. Takehira, et al., Catalysis Today, 24, (1995), 237-242) et les composites Ca$_{0,8}$Sr$_{0,2}$Ti$_{0,8}$Ni$_{0,2}$O et La$_{0,8}$Sr$_{0,2}$Co$_{0,8}$Ni$_{0,2}$O (T. Hayakawa et al., Catal. Lett., 22, (1993), 307-317) pour des applications purement catalytiques. Dans les dispositifs et les procédés de l'invention, l'application est tout autre puisque ces composés sont intégrés dans des systèmes électrochimiques symétriques et c'est le même matériau qui est utilisé en tant qu'électrode à air (composé restant monophasé) et électrode à hydrogène (composant devenant cermet).

Comparativement aux électrodes de l'art antérieur, les électrodes de l'invention ont des propriétés électrochimiques, électriques, mécaniques et catalytiques améliorées. Elles peuvent être utilisées avec toutes sortes de combustibles sans présenter les inconvénients des électrodes Ni/YSZ.

L'invention a pour objet une électrode d'un dispositif électrochimique tel qu'un dispositif SOFC ou un dispositif EVHT, cette électrode comprenant un matériau selon l'une des formules (I) et (II).

Elle a encore pour objet une électrode d'un dispositif électrochimique, cette électrode comprenant un matériau résultant de la réduction d'un matériau selon les formules (I) et (II).

De façon avantageuse, la réduction du matériau de l'invention de l'électrode à air est réalisée dans les conditions suivantes : cuisson en conditions réductrices, sous $H_2$ notamment, à une température comprise entre 800 et 1500°C et pour un temps variant de quelques minutes à plusieurs heures, et plus avantageusement comprise entre 1000 et 1300°C et pendant des durées comprises entre 1 et 24 h.

Ce traitement peut être mis en oeuvre sur l'électrode isolée ou directement dans la cellule.

Selon l'invention le matériau de formule (I) ou (II) peut être le matériau constitutif de l'électrode. Egalement selon l'invention le matériau résultant de la réduction du matériau de formule (I) ou (II) peut être le matériau constitutif de l'électrode.

Ces nouveaux matériaux peuvent également être employés dans d'autres applications, notamment comme couche fonctionnelle d'électrode. Plus généralement, l'invention a pour objet tout composant d'un article électrochimique, caractérisé en ce qu'il comporte un composé de formule générale (I) ou de formule générale (II), et tout composant d'un article électrochimique, caractérisé en ce qu'il comporte un composé issu de la réduction d'un composé de formule générale (I) ou de formule générale (II).

Par « couche fonctionnelle » on entend une fine couche d'un matériau électroconducteur placé entre l'électrode (anode ou cathode) et l'électrolyte. Eventuellement plusieurs couches fonctionnelles de différents matériaux peuvent être superposées. Ces couches fonctionnelles servent à protéger l'électrode elle-même d'une dégradation, ou à améliorer les performances ou l'activité catalytique de l'électrode. Une couche fonctionnelle a généralement une épaisseur de 1 à 50 $\mu$m, de préférence de 20 à 30 $\mu$m. Elle peut être poreuse, notamment elle peut présenter jusqu'à 70% de porosité.

L'invention a encore pour objet une cellule électrochimique comprenant une anode, une cathode et un électrolyte dans laquelle l'anode et la cathode comportent un même matériau choisi parmi ceux de formule (I) et (II).

L'invention a encore pour objet une cellule électrochimique comprenant une anode, une cathode et un électrolyte dans laquelle l'une des électrodes est en un matériau choisi parmi ceux de formule (I) et (II) et l'autre électrode est en un matériau issu de la réduction du matériau de la première électrode.

L'invention a encore pour objet une pile à combustible en oxyde solide ou SOFC, cette pile comprenant une cathode, une anode et un électrolyte, assemblés de façon laminaire, l'électrolyte étant placé entre l'anode et la cathode, la cathode comprenant un composé de formule générale (I) ou de formule générale (II), et l'anode comprenant un matériau identique à celui de la cathode ou un matériau issu de la réduction du matériau de la cathode.

L'électrolyte peut être fait de tout matériau habituellement employé dans les cellules SOFC. En particulier on peut utiliser comme electrolyte de l'oxyde de zirconium stabilisé à l'yttrium (ou YSZ), qui présente une bonne stabilité thermique et chimique. Mais on peut aussi utiliser de la cérine substituée ou non, des pérovskites telles que du LaGaO$_3$ substitué au Sr et/ou au Mg.

L'invention a encore pour objet un électrolyseur de la vapeur d'eau à haute température, comportant au moins un composant, en particulier au moins une anode, en matériau de formule (I) ou de formule (II) tels qu'ils ont été décrits ci-dessus et la cathode comprenant un matériau identique à celui de l'anode ou un matériau issu de la réduction du matériau de l'anode.

L'électrolyte peut être fait de tout matériau habituellement employé dans les cellules SOFC. En particulier on peut utiliser comme electrolyte de l'oxyde de zirconium stabilisé à l'yttrium (ou YSZ), qui présente une bonne stabilité thermique et chimique. Mais on peut aussi utiliser de la cérine substituée ou non, des pérovskites telles que du LaGaO$_3$ substitué au Sr et/ou au Mg.

En fonctionnement, ce ne seront pas à proprement parler les mêmes composés que l'on rencontrera des deux côtés de la cellule mais bien un composé de la composition nominale A côté air et, sous atmosphère réductrice, un cermet $zM^3/A'+A''$ qui en dérive par exsolution de l'élément de transition $M^3$ (Ni, Co, Cu) sous forme de fines particules métalliques, laissant un composé oxyde A' moins riche, voire exempt de métal $M^3$, en général conducteur électronique majoritaire, et éventuellement accompagné d'un deuxième composé oxyde A'' moins riche, voire exempt de métal $M^\beta$, en général isolant électronique. La réduction côté électrode à l'hydrogène intervenant *in operando*, c'est strictement le même matériau qui est présent côté cathodique et anodique durant la mise en forme et le cofrittage, facilitant ainsi ces étapes. Par la suite, le cermet formé côté électrode à hydrogène, de par son affiliation structurale au composé côté électrode à air, présentera des caractéristiques thermomécaniques voisines de ce dernier. Le vieillissement thermomécanique sera alors limité.

Les cellules selon l'invention sont moins coûteuses car elles n'emploient qu'un seul matériau pour la fabrication de l'anode et de la cathode, le procédé d'élaboration comprend une seule étape de traitement thermique pour conduire à un co-frittage des électrodes, ce qui permet de limiter les problèmes d'interdiffusion au sein de la cellule.

Ainsi on peut obtenir des cellules plus fiables, plus robustes et potentiellement moins coûteuses.

Ces nouveaux matériaux permettent d'envisager de nouveaux procédés de production de cellules électrochimiques. Outre les procédés habituels de fabrication de cellules électrochimiques, on peut prévoir un nouveau procédé qui comprend une étape de trempage d'un électrolyte dans un produit de formule (I) ou (II), ce trempage (dip-coating) permettant le dépôt du produit sur deux faces de l'électrolyte, puis un séchage et un traitement thermique de co-frittage. A la mise en route de la cellule, l'électrode à hydrogène est réduite et la cellule peut entrer en fonctionnement normal.

Sinon, de façon classique, on produit une encre par dilution du matériau de l'invention dans un liant et on effectue le dépôt par sérigraphie sur l'une ou de préférence sur deux faces de l'électrolyte, puis on traite thermiquement de façon à provoquer le frittage du dépôt.

## EXEMPLES

Exemple 1 - Synthèse du composé La$_{0,5}$Sr$_{0,5}$Ti$_{0,75}$Ni$_{0,25}$O$_3$ (~4 g) sous forme pulvérulente par voie solide.

Les précurseurs La$_2$O$_3$ (1,53782 g), Sr(CO$_3$) (1,39350 g), TiO$_2$ (1,13092 g) et NiO (0,35255 g) sont mélangés manuellement en proportions stoechiométriques dans un mortier en agate en présence d'acétone pour faciliter l'homogénéisation. Le mélange résultant est calciné à 1 200°C pendant 12h sous air selon le traitement thermique suivant :

$$20°C \xrightarrow{\text{4h}} 1\ 200°C/12h \xrightarrow{\text{4h}} 20°C$$

Puis, le composé formé est broyé et pressé sous forme d'une pastille au moyen d'un pressage uniaxial. Cette pastille subit alors un deuxième traitement thermique de 24h à 1 350°C sous air.

$$20°C \xrightarrow{\text{6h}} 1\ 350°C/24h \xrightarrow{\text{6h}} 20°C$$

Elle est ensuite broyée manuellement et tamisée (tamis de 20 $\mu$m) afin d'obtenir la poudre de $La_{0,5}Sr_{0,5}Ti_{0,75}Ni_{0,25}O_3$. Le composé alors synthétisé est pur comme le montre le diagramme de diffraction des rayons X sur poudre de la figure 2.

Exemple 2 - Synthèse du composé $Ce_{0,5}Sr_{0,5}Ti_{0,75}Ni_{0,25}O_3$ (~4g) sous forme pulvérulente par voie solide.

Les précurseurs $Ce_2(CO_3)_3$ (2,16671 g), $Sr(CO_3)$ (1,38984 g), $TiO_2$ (1,12545 g) et NiO (0,35161 g) sont mélangés manuellement en proportions stoechiométriques dans un mortier en agate en présence d'acétone pour faciliter l'homogénéisation. Le mélange résultant est calciné à 1200°C pendant 12h sous flux d'argon (7 ml.h$^{-1}$) selon le traitement thermique suivant :

$$20°C \xrightarrow{\text{4h}} 1200°C/12h \xrightarrow{\text{4h}} 20°C$$

Puis, le composé formé est broyé et pressé sous forme d'une pastille au moyen d'un pressage uniaxial. Cette pastille subit alors un deuxième traitement thermique de 24h à 1350°C sous flux d'argon (7 ml.h$^{-1}$).

$$20°C \xrightarrow{\text{6h}} 1350°C/24h \xrightarrow{\text{6h}} 20°C$$

Elle est ensuite broyée manuellement et tamisée (tamis de 20 $\mu$m) afin d'obtenir la poudre de $Ce_{0,5}Sr_{0,5}Ti_{0,75}Ni_{0,25}O_3$.

Exemple 3 - Elaboration par sérigraphie d'une anode à base de $La_{0,5}Sr_{0,5}Ti_{0,75}Ni_{0,25}O_3$ pour SOFC

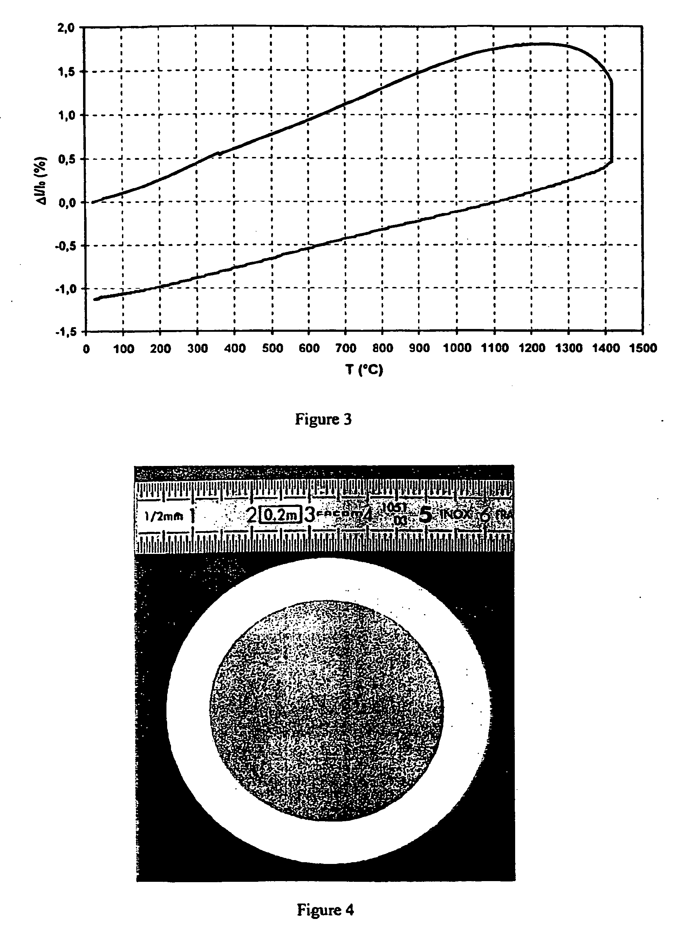

70 % massique de poudre sont mélangés avec 30 % massique d'un mélange terpinéol/éthyl cellulose (95/5 % massique). Cette préparation est homogénéisée manuellement puis au moyen d'un broyeur tricylindre (3 passages successifs permettent d'obtenir une encre homogène). L'encre est ensuite déposée par sérigraphie à la surface d'un électrolyte support de zircone stabilisée à l'yttrium (8 % mol). Le système formé est ensuite séché 15 min dans une étuve à 100°C. Afin de donner cohésion à l'interface électrode/électrolyte et tenue mécanique au dépôt un traitement thermique est nécessaire. Les condition de ce traitement ont été déterminées via une expérience de dilatométrie (figure 3) réalisée sous air en géométrie verticale sur un barreau cylindrique de $La_{0,5}Sr_{0,5}Ti_{0,75}Ni_{0,25}O_3$ de 10 mm de diamètre et de 8,86 mm d'épaisseur.

Ainsi, 4h à 1200°C sont suffisantes :

$$20°C \xrightarrow{\text{6h}} 1\ 200°C/4h \xrightarrow{\text{4h}} 20°C$$

Un dépôt naturellement poreux de 40$\mu$m d'épaisseur environ est ainsi obtenu. Les demi-cellules formées ne présentent pas de diffusion chimique apparente (figure 4).

A partir de la courbe de la figure 3, il a également été possible de déterminer au refroidissement un coefficient de dilatation thermique approché de $11.10^{-6}$ K$^{-1}$. Cette valeur est typique d'un composé à structure pérovskite et présente l'avantage d'être très proche de celui de l'électrolyte YSZ 8 % ($10.10^{-6}$ K$^{-1}$) limitant ainsi les contraintes mécaniques à l'interface électrode/électrolyte.

Exemple 4 - Réduction du composé $La_{0,5}Sr_{0,5}Ti_{0,75}Ni_{0,25}O_3$ pour former le matériau d'anode

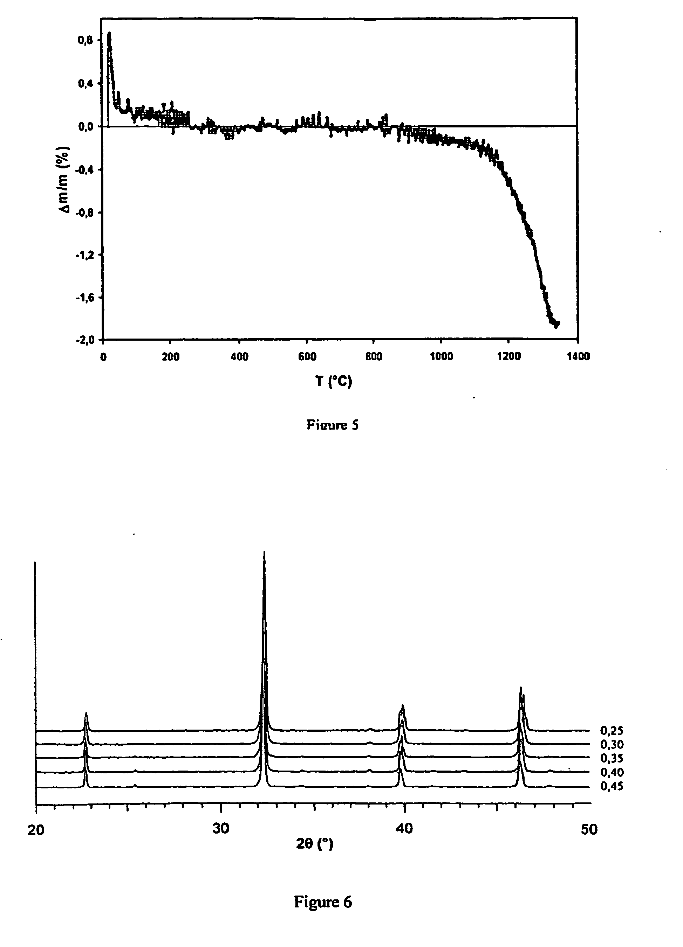

Un recuit sous Ar/H$_2$ (2 %) est nécessaire pour former le cermet Ni / [$La_{1/3}Sr_{2/3}TiO_3$, $La_2O_3$]. Une analyse Thermogravimétrique (ATG) sous Ar/H$_2$ (2 %) a été réalisée de 20°C à 1350°C (figure 5). Sur la courbe de la figure 5 une perte de masse est enregistrée à partir de 900°C environ et se poursuit jusqu'à 1350°C. Cette évolution est liée à la décomposition sous atmosphère réductrice du composé $La_{0,5}Sr_{0,5}Ti_{0,75}Ni_{0,25}O_3$ en Ni, $La_{1/3}Sr_{2/3}TiO_3$ et $La_2O_3$. Un traitement de réduction optimal de 1h à 1300°C ou 24h à 1200°C sous Ar/H$_2$ (2%) est effectué sur le composé $La_{0,5}Sr_{0,5}Ti_{0,75}Ni_{0,25}O_3$.

Exemple 5

Les composés $La_{2x}Sr_{1-2x}Ti_{1-x}Ni_xO_3$ (0,25 < x < 0,45) sont synthétisés par combustion de gel nitrate-citrate qui est une variante de la méthode Pechini (US-3,330,697). $La_2O_3$ (fournisseur : Rhodia, 99,9%), $SrCO_3$ (fournisseur : Alfa Aesar, 99,99%), $(CH_3CO_2)_2Ni$ (fournisseur: Alfa Aesar, >99%) et $Ti\{OCH(CH_3)_2\}_4$ (fournisseur : Alfa Aesar, 99,995%) sont utilisés comme précurseurs métalliques. X est fixé par la quantité de chaque précurseur mis en oeuvre selon les connaissances de l'homme du métier. L'isopropoxyde de titane, $Ti\{OCH(CH_3)_2\}_4$, est préalablement dilué dans un mélange éthylène glycol / acide citrique pour limiter les risques de précipitation lors des synthèses. La concentration en ions titane de cette solution est déterminée par analyse thermogravimétrique 10h à 1000°C.

Tout d'abord, l'acide citrique $C_6H_8O_7$ est dissout dans un mélange eau distillée / acide nitrique HNO$_3$ (65% m), puis les précurseurs métalliques sont ajoutés un à un en proportions stoechiométriques sous agitation et léger chauffage (40-50°C). Le volume du mélange est alors réduit par chauffage à 150°C jusqu'à ce qu'il commence à gélifier. Une solution d'ammoniaque (NH$_4$OH à 28% vol.) est alors ajoutée à chaud pour neutraliser jusqu'à pH = 8. Le volume du mélange est de nouveau réduit jusqu'à gélification. Le gel est alors mis à sécher à l'étuve à 100°C. Lors du séchage, il gonfle et un xérogel est obtenu. Ce produit est d'aspect poreux et noir. Une pyrolyse de ce xérogel sous épiradiateur à rayonnement infra-rouge permet de poursuivre la réaction de combustion. Celle-ci se produit avec un grand dégagement de gaz (CO$_2$, H$_2$O,...) et donne une poudre très fine qui est broyée et calcinée à 600°C afin d'éliminer la majeure partie des composés organiques. La poudre ainsi obtenue est broyée manuellement de façon à l'homogénéiser puis calcinée selon le traitement thermique suivant :

$$20°C \xrightarrow{\ 5h\ } 1\,350°C/48h \xrightarrow{\ 5h\ } 20°C$$

La pureté des composés est vérifiée par diffraction des rayons X sur poudre au moyen d'un diffractomètre Brüker D8 (cf. figure 6 Diagramme RX des composés $La_{2x}Sr_{1-2x}Ti_{1-x}Ni_xO_3$ (0,25<x<0,45) après calcination à 1350°C).

**Revendications**

1. Composé de formule générale (I)

$$M^1{}_{x1}M^2{}_{x2}(Ti_{(1-y-z)}M^3{}_yM^4{}_z)O_{(3-\delta)} \qquad (I)$$

dans laquelle :

- $M^1$ représente un atome ou un mélange d'atomes choisis parmi les alcalino-terreux,
- $M^2$ représente un atome ou un mélange d'atomes choisis parmi les terres rares,
- $M^3$ représente un atome ou un mélange d'atomes choisis parmi les métaux de transition suivants : Ni, Co, Cu,
- $M^4$ représente un atome ou un mélange d'atomes choisis parmi les métaux de transition autres que Ni, Co, Cu ; les terres rares acceptant une coordination 6 ; les métaux pauvres de degré d'oxydation (+III),
- $0,9 \leq x_1 + x_2 \leq 1$ ; $0 < x_1 < 1$ ; $0 < x_2 < 1$

- $0{,}25 \leq y \leq 0{,}75$,
- $0 \leq z < 1$,
- $0 \leq \delta \leq 0{,}5$.

2. Composé de formule (I) selon la revendication 1, qui vérifie :

- $0 < x_1 \leq 0{,}5$ ; $0{,}4 \leq x_2 < 1$

3. Composé de formule générale (II)

$$(M^1{}_{x1}M^2{}_{x2})_{(m+1)}(Ti_{(1-y-z)}M^3{}_yM^4{}_z)_mO_{3m+1-\delta} \qquad (II)$$

dans laquelle :

- $M^1$ représente un atome ou un mélange d'atomes choisis parmi les alcalino-terreux,
- $M^2$ représente un atome ou un mélange d'atomes choisis parmi les terres rares,
- $M^3$ représente un atome ou un mélange d'atomes choisis parmi les métaux de transition suivants : Ni, Co, Cu,
- $M^4$ représente un atome ou un mélange d'atomes choisis parmi les métaux de transition autres que Ni, Co, Cu ; les terres rares acceptant une coordinance 6 ; les métaux pauvres de degré d'oxydation (+III),
- $0{,}9 \leq x_1 + x_2 \leq 1$ ; $0 < x_1 < 1$ ; $0 < x_2 < 1$,
- $0{,}25 \leq y \leq 0{,}75$,
- $0 \leq z < 1$,
- $0 \leq \delta \leq 0{,}5$,
- m est un entier supérieur ou égal à 1.

4. Composé selon la revendication 3 qui vérifie :

m=1 et $0{,}20 \leq x_1 \leq 0{,}80$ ; $0{,}20 \leq x_2 \leq 0{,}80$.

5. Composé selon l'une quelconque des revendications 1 à 4, dans lequel une ou plusieurs des conditions suivantes est vérifiée :

- $M^1$ est choisi parmi : Ba, Sr, Ca ou un mélange de ces atomes,
- $M^2$ est choisi parmi : La, Ce, Pr, Nd, Y ou un mélange de ces atomes,
- $M^3$ représente Ni,
- $M^4$ représente un atome ou un mélange d'atomes choisis parmi :

    (i) les métaux de la première série de transition, de numéro atomique de 21 à 30, en dehors de Ni, Co, Cu et encore plus préférentiellement un atome ou un mélange d'atomes choisis parmi : Mn, Fe, V,
    (ii) les métaux pauvres suivants : Al, Ga, In,

- $0{,}95 \leq x_1 + x_2 \leq 1$.

6. Procédé de fabrication des composés de formule (I) ou (II) selon l'une quelconque des revendications 1 à 5, **caractérisé en ce que** :

- l'on utilise les oxydes et/ou les carbonates métalliques de Ti, $M^1$, $M^2$, $M^3$ et $M^4$ dans les proportions stoechiométriques appropriées,
- les oxydes et/ou les carbonates métalliques sont soumis à un broyage en présence d'un solvant, et en présence d'air, pendant plusieurs heures,
- le solvant est évaporé, la poudre est pastillée et calcinée, de préférence à une température supérieure à 1 000°C, pendant plusieurs heures sous air.

7. Electrode d'un dispositif électrochimique, cette électrode comprenant un matériau choisi parmi ceux de formules (I) et (II) selon l'une quelconque des revendications 1 à 5.

8. Electrode d'un dispositif électrochimique, cette électrode comprenant un matériau résultant de la réduction d'un matériau choisi parmi ceux de formules (I) et (II) selon l'une quelconque des revendications 1 à 5.

9. Electrode selon la revendication 8, résultant de la réduction d'un matériau choisi parmi ceux de formules (I) et (II) par un procédé qui comprend les étapes suivantes : cuisson en conditions réductrices, sous $H_2$ notamment, à une température comprise entre 800 et 1500°C et pour un temps variant de quelques minutes à plusieurs heures, et plus avantageusement comprise entre 1000 et 1300°C et pendant des durées comprises entre 1 et 24 h.

10. Cellule électrochimique comprenant une anode, une cathode et un électrolyte dans laquelle l'anode et la cathode comportent un même matériau choisi parmi ceux de formule (I) et (II) selon l'une quelconque des revendications 1 à 5.

11. Cellule électrochimique comprenant une anode, une cathode et un électrolyte dans laquelle l'une des électrodes est en un matériau choisi parmi ceux de formule (I) et (II) selon l'une quelconque des revendications 1 à 5 et l'autre électrode est en un matériau issu de la réduction du matériau de la première électrode.

12. Cellule électrochimique selon l'une des revendications 10 et 11, cette cellule étant une pile combustible en oxyde solide, cette pile comprenant une cathode, une anode et un électrolyte, assemblés de façon laminaire, la cathode comprenant un composé de formule générale (I) ou de formule générale (II), et l'anode comprenant un matériau identique à celui de la cathode ou un matériau issu de la réduction du matériau de la cathode.

13. Cellule électrochimique selon l'une des revendications 11 et 12, cette cellule étant un électrolyseur de la vapeur d'eau à haute température, comportant au moins une anode, en matériau de formule (I) ou de formule (II) selon l'une des revendications 1 à 5 et la cathode comprenant un matériau identique à celui de l'anode ou un matériau issu de la réduction du matériau de l'anode.

14. Procédé de production d'une cellule électrochimique selon l'une des revendications 10 à 13, qui comprend une étape de trempage d'un électrolyte dans un produit de formule (I) ou (II) selon l'une quelconque des revendications 1 à 5, ce trempage permettant le dépôt du produit sur deux faces de l'électrolyte, puis un séchage et un traitement thermique de co-frittage.

**Claims**

1. Compound of the general formula (I)

$$M^1_{x1}M^2_{x2}(Ti_{(1-y-z)}M^3_yM^4_z)O_{(3-\delta)} \qquad (I)$$

in which :

   - $M^1$ stands for an atom or a mixture of atoms selected from alkaline earth elements,
   - $M^2$ stands for an atom or a mixture of atoms selected from rare earth elements,
   - $M^3$ stands for an atom or a mixture of atoms selected from the following transition metals: Ni, Co, Cu,
   - $M^4$ stands for an atom or a mixture of atoms selected from transition metals other than Ni, Co, Cu; the rare earth elements accepting a coordination number 6; the poor metals having a degree of oxidation (+III),
   - $0.9 \leq x_1 + x_2 \leq 1$ ; $0 < x_1 < 1$ ; $0 < x_2 < 1$
   - $0.25 \leq y \leq 0.75$,
   - $0 \leq z \leq 1$,
   - $0 \leq \delta \leq 0.5$,

2. Compound of general formula (I) as claimed in claim 1, which satisfies:
   - $0 < x_1 \leq 0.5$ ; $0.4 \leq x_2 < 1$.

3. Compound of general formula (II)

$$(M^1_{x1}M^2_{x2})_{(m+1)}(Ti_{(1-y-z)}M^3_yM^4_z)_mO_{3m+1-\delta} \qquad (II)$$

in which:

   - $M^1$ stands for an atom or a mixture of atoms selected from alkaline earth elements,
   - $M^2$ stands for an atom or a mixture of atoms selected from rare earth elements,
   - $M^3$ stands for an atom or a mixture of atoms selected from the following transition metals: Ni, Co, Cu,

- $M^4$ stands for an atom or a mixture of atoms selected from transition metals other than Ni, Co, Cu; the rare earth elements accepting a coordination number 6; the poor metals having a degree of oxidation (+III),
- $0.9 \leq x_1 + x_2 \leq 1$ ; $0 < x_1 < 1$ ; $0 < x_2 < 1$,
- $0.25 \leq y \leq 0.75$,
- $0 \leq z < 1$,
- $0 \leq \delta \leq 0.5$,
- m is a an integer greater than or equal to 1.

4. Compound as claimed in claim 3, which satisfies:
   m=1 and $0.20 \leq x_1 \leq 0.80$ ; $0.20 \leq x_2 \leq 0.80$.

5. Composition as claimed in any one of claims 1 to 4, in which one or more of the following conditions is satisfied:

   - $M^1$ is selected from: Ba, Sr, Ca or a mixture of these atoms,
   - $M^2$ is selected from: La, Ce, Pr, Nd, Y or a mixture of these atoms,
   - $M^3$ stands for Ni,
   - $M^4$ stands for an atom or a mixture of atoms selected from:

     (i) metals from the first transition series with an atomic number of 21 to 30 other than Ni, Co, Cu and even more preferably an atom or a mixture of atoms selected from: Mn, Fe, V,
     (ii) the following poor metals: Al, Ga, In,

   - $0.95 \leq x_1 + x_2 \leq 1$.

6. Method of producing compounds of formula (I) or (II) as claimed in any one of claims 1 to 5, **characterised in that**:

   - the oxides and/or metallic carbonates of Ti, $M^1$, $M^2$, $M^3$ and $M^4$ are used in appropriate stoichiometric proportions,
   - the oxides and/or metallic carbonates are subjected to a milling process in the presence of a solvent and in the presence of air, for several hours,
   - the solvent is evaporated, the powder is formed into pellets and calcined, preferably at a temperature above 1,000°C for several hours under air.

7. Electrode of an electrochemical device, which electrode comprises a material selected from those of formulas (I) and (II) as claimed in any one of claims 1 to 5.

8. Electrode of an electrochemical device, which electrode comprises a material obtained by reducing a material selected from those of formulas (I) and (II) as claimed in any one of claims 1 to 5.

9. Electrode as claimed in claim 8, obtained by reducing a material selected from those of formulas (I) and (II) by a process which comprises the following steps: firing under reducing conditions, in particular under $H_2$, at a temperature in the range of between 800 and 1,500°C and for a time varying from a few minutes to several hours and more advantageously between 1,000 and 1,300°C and for periods ranging between 1 and 24h.

10. Electrochemical cell comprising an anode, a cathode and an electrolyte in which the anode and cathode comprise one and the same material selected from those of formulas (I) and (II) as claimed in any one of claims 1 to 5.

11. Electrochemical cell comprising an anode, a cathode and an electrolyte in which one of the electrodes is made from a material selected from those of formulas (I) and (II) as claimed in any one of claims 1 to 5 and the other electrode is made from a material obtained by reducing the material of the first electrode.

12. Electrochemical cell as claimed in one of claims 10 and 11, which cell is a solid oxide fuel cell, this cell comprising a cathode, an anode and an electrolyte assembled in a laminar arrangement, the cathode comprising a compound of general formula (I) or general formula (II) and the anode comprising a material identical to that of the cathode or a material obtained by reducing the material of the cathode.

13. Electrochemical cell as claimed in one of claims 11 and 12, which cell is a high-temperature steam electrolysis cell, comprising at least an anode made from a material of formula (I) or formula (II) as claimed in one of claims 1 to 5, and the cathode comprising a material identical to that of the anode or a material obtained by reducing the material of the anode.

14. Method of producing an electrochemical cell as claimed in one of claims 10 to 13, which comprises a step of dipping an electrolyte in a product of formula (I) or formula (II) as claimed in any one of claims 1 to 5, this dipping process enabling the product to be deposited on two faces of the electrolyte, followed by drying and a thermal co-sintering treatment.

**Patentansprüche**

1. Verbindung der allgemeinen Formel (I)

$$M^1_{x1}M^2_{x2}(Ti_{(1-y-z)}M^3_yM^4_z)O_{(3-\delta)} \qquad (I)$$

in der:

   - $M^1$ ein Atom oder ein Gemisch von Atomen, ausgewählt aus Erdalkalimetallen, darstellt,
   - $M^2$ ein Atom oder ein Gemisch von Atomen, ausgewählt aus den Seltenerden, darstellt,
   - $M^3$ ein Atom oder ein Gemisch von Atomen, ausgewählt aus den folgenden Übergangsmetallen: Ni, Co, Cu, darstellt,
   - $M^4$ ein Atom oder ein Gemisch von Atomen, ausgewählt aus anderen Übergangsmetallen als Ni, Co, Cu; Seltenerden, die eine Koordinationszahl 6 annehmen; Metallen mit einer Oxidationszahl (+III), darstellt,
   - $0{,}9 \leq x_1 + x_2 \leq 1$ ; $0 < x_1 < 1$ ; $0 < x_2 < 1$
   - $0{,}25 \leq y \leq 0{,}75$,
   - $0 \leq z < 1$,
   - $0 \leq \delta \leq 0{,}5$.

2. Verbindung der Formel (I) gemäß Anspruch 1, für die gilt:
   - $0 < x_1 \leq 0{,}5$ ; $0{,}4 \leq x_2 < 1$

3. Verbindung der allgemeinen Formel (II)

$$(M^1_{x1}M^2_{x2})_{(m+1)}(Ti_{(1-y-z)}M^3_yM^4_z)_mO_{3m+1-\delta} \qquad (II)$$

in der:

   - $M^1$ ein Atom oder ein Gemisch von Atomen, ausgewählt aus den Erdalkalimetallen, darstellt,
   - $M^2$ ein Atom oder ein Gemisch von Atomen, ausgewählt aus den Seltenerden, darstellt,
   - $M^3$ ein Atom oder ein Gemisch von Atomen, ausgewählt aus den folgenden Übergangsmetallen: Ni, Co, Cu, darstellt,
   - $M^4$ ein Atom oder ein Gemisch von Atomen, ausgewählt aus anderen Übergangsmetallen als Ni, Co, Cu; Seltenerden, die eine Koordinationszahl 6 annehmen; Metallen mit einer Oxidationszahl (+III), darstellt,
   - $0{,}9 \leq x_1 + x_2 \leq 1$ ; $0 < x_1 < 1$ ; $0 < x_2 < 1$,
   - $0{,}25 \leq y \leq 0{,}75$,
   - $0 \leq z < 1$,
   - $0 \leq \delta \leq 0{,}5$,
   - m eine ganze Zahl größer oder gleich 1 ist.

4. Verbindung gemäß Anspruch 3, für die gilt:
   m=1 und $0{,}20 \leq x_1 \leq 0{,}80$ ; $0{,}20 \leq x_2 \leq 0{,}80$.

5. Verbindung gemäß einem der Ansprüche 1 bis 4, in der eine oder mehrere der folgenden Bedingungen erfüllt ist/sind:

   - $M^1$ ist ausgewählt aus: Ba, Sr, Ca oder einem Gemisch dieser Atome,
   - $M^2$ ist ausgewählt aus: La, Ce, Pr, Nd, Y oder einem Gemisch dieser Atome,
   - $M^3$ stellt Ni dar,
   - $M^4$ stellt ein Atom oder ein Gemisch von Atomen dar, ausgewählt aus:

(i) den Metallen der ersten Übergangsmetallreihe mit Atomzahl 21 bis 30, außer Ni, Co, Cu, und bevorzugter einem Atom oder einem Gemisch von Atomen, ausgewählt aus: Mn, Fe, V,

(ii) den folgenden Metallen: Al, Ga, In, - $0,95 \leq x_1 + x_2 \leq 1$.

6. Verfahren zur Herstellung von Verbindungen der Formel (I) oder (II) gemäß einem der Ansprüche 1 bis 5, **dadurch gekennzeichnet, dass**:

- man die Metall-Oxide und/oder -Carbonate von Ti, $M^1$, $M^2$, $M^3$ und $M^4$ in den geeigneten stöchiometrischen Verhältnismengen verwendet,
- die Metall-Oxide und/oder -Carbonate einem Vermahlen in Gegenwart eines Lösungsmittels und in Gegenwart von Luft während mehrerer Stunden unterworfen werden,
- das Lösungsmittel verdampft wird, das Pulver granuliert und calciniert wird, vorzugsweise bei einer Temperatur von über 1000°C, während mehrerer Stunden unter Luft.

7. Elektrode einer elektrochemischen Vorrichtung, wobei diese Elektrode ein Material umfasst, das aus denen der Formeln (I) und (II) gemäß einem der Ansprüche 1 bis 5 ausgewählt ist.

8. Elektrode einer elektrochemischen Vorrichtung, wobei diese Elektrode ein Material umfasst, das aus der Reduktion eines Materials, ausgewählt aus denen der Formeln (I) und (II) gemäß einem der Ansprüche 1 bis 5, resultiert.

9. Elektrode gemäß Anspruch 8, die aus der Reduktion eines Materials, ausgewählt aus denen der Formeln (I) und (II), durch ein Verfahren resultiert, das die folgenden Stufen umfasst: Kochen unter reduzierenden Bedingungen unter $H_2$, insbesondere bei einer Temperatur zwischen 800 und 1500°C und für eine Zeit, die von einigen Minuten bis viele Stunden variiert, und vorteilhafterweise zwischen 1000 und 1300°C und während Zeitdauern zwischen 1 und 24 h.

10. Brennstoffzelle, umfassend eine Anode, eine Kathode und einen Elektrolyten, in der die Anode und die Kathode ein gleiches Material umfassen, ausgewählt aus denen der Formel (I) und (II) gemäß einem der Ansprüche 1 bis 5.

11. Brennstoffzelle, umfassend eine Anode, eine Kathode und einen Elektrolyten, in der eine der Elektroden aus einem Material besteht, das aus denen der Formel (I) und (II) gemäß einem der Ansprüche 1 bis 5 ausgewählt ist, und die andere Elektrode aus einem Material besteht, das aus der Reduktion des Materials der ersten Elektrode resultiert.

12. Brennstoffzelle gemäß einem der Ansprüche 10 und 11, wobei diese Zelle ein Brennstoffelement aus festem Oxid ist, wobei das Brennstoffelement eine Kathode, eine Anode und einen Elektrolyten umfasst, die in laminarer Art zusammengebaut sind, wobei die Kathode eine Verbindung der allgemeinen Formel (I) oder der allgemeinen Formel (II) umfasst und die Anode ein zu dem der Kathode identisches Material oder ein Material das aus der Reduktion des Materials der Kathode resultiert, umfasst.

13. Brennstoffzelle gemäß einem der Ansprüche 11 und 12, wobei diese Zelle ein Elektrolysator für Wasserdampf hoher Temperatur ist, der wenigstens eine Anode aus Material der Formel (I) oder der Formel (II) gemäß einem der Ansprüche 1 bis 5 umfasst, und wobei die Kathode ein zu dem der Anode identisches Material oder ein Material, das aus der Reduktion des Materials der Anode resultiert, umfasst.

14. Verfahren zur Herstellung einer Brennstoffzelle gemäß einem der Ansprüche 10 bis 13, umfassend eine Stufe des Imprägnierens eines Elektrolyten in ein Produkt der Formel (I) oder (II) gemäß einem der Ansprüche 1 bis 5, wobei diese Imprägnierung die Abscheidung des Produkts auf zwei Seiten des Elektrolyts ermöglicht, dann Trocknung und thermische Behandlung zum Co-Sintern.

$n + m = 6$

Figure 1

Figure 2

Figure 3

Figure 4

Figure 5

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03094268 A
- JP 2005050760 A
- US 2004265669 A1
- US 3330697 A

**Littérature non-brevet citée dans la description**

- **Q.X. Fu et al.** *Journal of the Electrochemical Society,* 2006, vol. 153 (4), D74-D83
- **Olga A. Marina et al.** *Solid State Ionics,* 2002, vol. 149, 21-28
- **D.M. Bastidas et al.** *Journal of Materials Chemistry,* 2006, vol. 16, 1603-1605
- **J.C. Ruiz-Moralez et al.** *Electrochimica Acta,* 2006, vol. 52, 278-284
- **J. Peña-Martinez et al.** *Electrochimica Acta,* 2007, vol. 52, 2950-2958
- **P.R: Slater et al.** *Journal of Materials Chemistry,* 01 Décembre 1997, vol. 7 (12), 2495-2498
- **K.S. Aleksandrov ; V.V. Berznosikov.** Hierarchies of perovskite-like crystals (review). *Phys. Solid State,* 1997, vol. 39, 695-714
- **F. Lichtenberg et al.** *Progress in Solid State Chemistry,* 2001, vol. 29, 1-17
- **F. Lichtenberg et al.** *Progress in Solid State Chemistry,* 2001, vol. 29, 1-18
- **W. Sugimoto et al.** *Solid State Ionics,* 1998, vol. 108, 315-319
- **R. Shiozaki et al.** *Stud. Surf. Sci. Catal.,* 1997, vol. 110, 701-710
- **T. Hayakawa et al.** *Angew. Chem. Int. Ed. Engl.,* 1996, vol. 35, 192-195
- **K. Takehira et al.** *Catalysis Today,* 1995, vol. 24, 237-242
- **T. Hayakawa et al.** *Catal. Lett.,* 1993, vol. 22, 307-317